# EUROPEAN PATENT APPLICATION

(11) **EP 3 836 756 A1**
(43) Date of publication of application: **16.06.2021**
(21) Application number: 19847226.8
(22) Date of filing: 09.08.2019
(51) Int. Cl.: H05B 45/00, B60Q 1/00

(54) **LIGHTING CIRCUIT AND VEHICULAR LAMP**

(30) Priority: 10.08.2018 JP 2018151992; 07.11.2018 JP 2018210026
(71) Applicant: KOITO MANUFACTURING CO., LTD., Minato-ku Tokyo 108-8711 (JP)
(72) Inventor: ICHIKAWA Tomoyuki, Shizuoka-shi Shizuoka 424-8764 (JP)
(74) Representative: Algemeen Octrooi- en Merkenbureau B.V.
(86) International application number: PCT/JP2019/031710
(87) International publication number: WO 2020/032269

(57) **Abstract**

A driving circuit 610 receives an input voltage V_{IN}, and supplies a driving current I_{LED} to a semiconductor light source 502. A plurality of m (m ≥ 2) bypass switches SW1 through SW3 are coupled in parallel with multiple light-emitting elements 504_1 through 504_3, respectively. A bypass control unit 650 generates m-phase gate pulse signals Sg1 through Sg3 having a duty cycle that corresponds to the input voltage V_{IN} and phases shifted in increments of 360°/m, and controls the m bypass switches SW1 through SW3 according to the m-phase gate pulse signals.

## Description

### [TECHNICAL FIELD]

The present invention relates to a lamp employed for an automobile or the like.

### [BACKGROUND ART]

As conventional light sources used for automotive lamps, in many cases, electric bulbs have been employed. In recent years, semiconductor light sources such as light-emitting diodes (LEDs) or the like are coming to be widely employed.

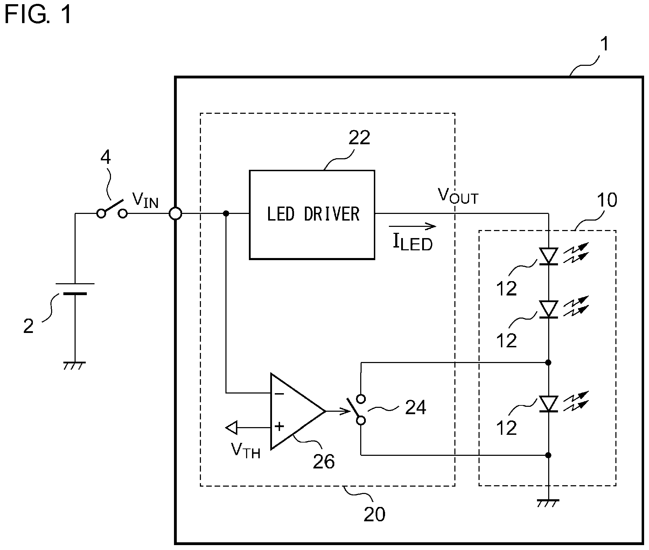

Fig. 1 is a block diagram showing a conventional automotive lamp 1. The automotive lamp 1 receives a DC voltage (input voltage V_{IN}) from a battery 2 via a switch 4. A light source 10 includes a plurality of n LEDs 12 coupled in series. The luminance of the light source 10 is controlled according to a driving current I_{LED} that flows through the light source 10. A lighting circuit 20 includes an LED driver 22 that stabilizes the driving current I_{LED} to a target value I_{REF} that corresponds to a target luminance.

With the forward voltage applied in a state in which the driving current I_{LED} that flows through the LED 12 is stabilized to the target value I_{REF} as Vf₀, the voltage V_{MIN} across both ends of the light source 10 (which will be referred to as a "minimum turn-on voltage") is represented by V_{MIN} = Vf₀ × 3. In a case in which n = 3, a white-color LED requires a V_{MIN} of approximately 11 V. On the other hand, a red-color LED requires a V_{MIN} of approximately 9 V. In other words, when the output voltage V_{OUT} of the LED driver 22 becomes lower than the minimum voltage V_{MIN}, the driving current I_{LED} cannot be maintained at the target value I_{REF}, leading to a situation in which multiple LEDs 12 are turned off.

Regarding the lighting circuit 20 which is required to be configured with a low cost, the LED driver 22 is configured as a constant current series regulator or a constant current output switching converter. In this case, the output voltage V_{OUT} of the LED driver 22 is lower than the input voltage V_{IN}. In a full-charge state, the battery supplies an output voltage of 13 V. However, as the discharging of the battery advances, in some cases, the input voltage V_{IN} becomes 10 V or lower. Accordingly, as the battery voltage becomes low (which will be referred to as a "low-voltage state"), this leads to a situation in which the output voltage V_{OUT} is lower than the minimum turn-on voltage V_{MIN}. In this state, the LEDs 12 are turned off.

In order to prevent the light source 10 from turning off even in such a low-voltage state, a bypass switch 24 and a bypass control circuit 26 are provided. The bypass switch 24 is coupled in parallel with a single predetermined LED 12_n. When the input voltage V_{IN} is lower than a predetermined threshold value V_{TH}, the bypass control circuit 26 judges that a low-voltage state has occurred, and turns on the bypass switch 24. In this state, the minimum turn-on voltage V_{MIN} is represented by V_{MIN} = Vf₀ × (n -1), and accordingly, the relation V_{IN} > V_{MIN} is maintained. That is to say, as a tradeoff, the LED 12_n is turned off in order to maintain the turn-on state of the remaining LEDs 12_1 through 12_(n-1).

### [Related Art Documents]

### [Patent Documents]

### [Patent document 1]

Japanese Patent Application Laid Open No. 2016-197711

### [DISCLOSURE OF THE INVENTION]

### [PROBLEM TO BE SOLVED BY THE INVENTION]

As a result of investigating the lighting circuit 20 shown in Fig. 1, the present inventors have recognized the following problem.

With the lighting circuit 20 shown in Fig. 1, in the low-voltage state, the same LED 12_n is turned off at all times. Typically, the multiple LEDs 12_1 through 12_n are arranged in the form of an array on a single plane. Accordingly, in a case in which the same LED 12_n is turned off at all times, only a portion that corresponds to the LED 12_n becomes dark. In a case in which the automotive lamp 1 is configured as a headlamp, uneven luminance occurs in a light distribution pattern, leading to the potential to cause difficulty for the driver to see ahead of the vehicle. On the other hand, in a case in which the automotive lamp 1 is configured as a stop lamp or tail lamp, such an arrangement has the potential to degrade the appearance.

The present invention has been made in order to solve such a problem. Accordingly, it is an exemplary purpose of an embodiment of the present invention to provide a lighting circuit that is capable of suppressing the occurrence of uneven luminance in a semiconductor light source even in a low-voltage state.

### [MEANS TO SOLVE THE PROBLEM]

An embodiment of the present invention relates to a lighting circuit for a semiconductor light source including multiple light-emitting elements coupled in series. The lighting circuit includes: a driving circuit structured to receive an input voltage, and to supply a driving current to the semiconductor light source; a plurality of m (m ≥ 2) bypass switches coupled in parallel with a corresponding part from among the multiple light-emitting elements; and a bypass control unit structured to generate m-phase gate pulse signals having a duty cycle that corresponds to the input voltage and with shifted phases, and to control the m bypass switches according to the m-phase gate pulse signals.

Another embodiment of the present invention also relates to the lighting circuit. The lighting circuit includes: a driving circuit structured to receive an input voltage, and to supply a driving current to the semiconductor light source; a plurality of m (m ≥ 2) bypass switches coupled in parallel with a corresponding part from among the multiple light-emitting elements; and a bypass control unit structured to determine the number k of the bypass switches to be set to the on state at the same time according to the input voltage, and to change the k bypass switches set to the on state with a predetermined period.

It should be noted that any combination of the components described above, any component of the present invention, or any manifestation thereof, may be mutually substituted between a method, apparatus, system, and so forth, which are also effective as an embodiment of the present invention.

### [ADVANTAGE OF THE PRESENT INVENTION]

With an embodiment of the present invention, the occurrence of uneven luminance in a semiconductor light source can be suppressed.

### [BRIEF DESCRIPTION OF THE DRAWINGS]

Fig. 1 is a block diagram showing a conventional automotive lamp;
Fig. 2 is a block diagram showing an automotive lamp including a lighting circuit according to an embodiment;
Fig. 3 is a diagram showing a relation between the input voltage V_{IN} and the duty cycle of the gate pulse signal Sg in the lighting circuit;
Figs. 4A through 4D are operation waveform diagrams each showing the operation of the lighting circuit;
Fig. 5 is a diagram showing a relation between the input voltage V_{IN} and the amount of light provided by a semiconductor light source;
Fig. 6 is a diagram showing another example of the relation between the input voltage V_{IN} and the duty cycle of the gate pulse signal Sg in the lighting circuit;
Fig. 7 is a block diagram showing an example configuration of a bypass control unit;
Fig. 8 is an operation waveform diagram showing the operation of the bypass control unit shown in Fig. 7;
Fig. 9 is a block diagram showing an example configuration of a driving circuit;
Figs. 10A and 10B are diagrams each showing a relation between the input voltage V_{IN} and the duty cycle of the gate pulse signal Sg in the lighting circuit according to a modification 1;
Fig. 11 is a circuit diagram showing an automotive lamp according to a modification 5;
Fig. 12 is a time chart showing the operation of the automotive lamp shown in Fig. 11; and
Fig. 13 is an operation waveform diagram showing the operation of the automotive lamp shown in Fig. 11.

### [BEST MODE FOR CARRYING OUT THE INVENTION]

An embodiment disclosed in the present specification relates to a lighting circuit for a semiconductor light source including multiple light-emitting elements coupled in series. The lighting circuit includes: a driving circuit configured to receive an input voltage, and to supply a driving current to the semiconductor light source; a plurality of m (m ≥ 2) bypass switches coupled in parallel with a corresponding part from among the multiple light-emitting elements; and a bypass control unit configured to generate m-phase gate pulse signals having a duty cycle that corresponds to the input voltage and phases shifted in increments of 360°/m, and to control the m bypass switches according to the m-phase gate pulse signals.

When the duty cycle is set to 360°/m in angle equivalent, a single bypass switch is set to the on state at all times, thereby setting a part of the light-emitting elements to the turn-off state. With such an arrangement, the bypass switch in the on state is sequentially changed, which sequentially changes the light-emitting element in the off state, thereby suppressing the occurrence of uneven luminance in the semiconductor light source.

Also, the duty cycle of the m-phase gate pulse signals may be continuously changed according to the input signal. This allows the amount of light provided by the semiconductor light source to be continuously lowered according to a reduction of the input voltage, thereby reproducing natural dimming power supply voltage characteristics such as those of a halogen lamp. In a case in which the duty cycle is changed in a discontinuous manner, when the input voltage fluctuates in the vicinity of a threshold value, such an arrangement has the potential to cause the occurrence of chattering, i.e., a discontinuous change in the luminance of the semiconductor light source. By changing the duty cycle in a continuous manner, this arrangement is capable of suppressing the occurrence of chattering.

Also, the driving circuit may include: a step-down converter; and a converter controller structured to feedback control the step-down converter such that the driving current approaches a target value. Also, a ripple control method that supports high responsivity to a change in the load may be employed. This arrangement is capable of suppressing an increase in the driving current due to the turn-on of the bypass switch.

Also, the driving circuit may further include a current smoothing filter coupled to an output of the step-down converter. The current smoothing filter allows the driving circuit to suppress a change in the driving current due to a change in load.

Also, the converter controller may suspend a driving operation of the step-down converter during a suspension period from a start timing synchronized with the turn-on of the bypass switch. The discharge current that flows from the current smoothing filter is canceled out by a reduction in the output current of the step-down converter. This suppresses the occurrence of overshoot and overcurrent.

### EMBODIMENTS

Description will be made below regarding the present invention based on preferred embodiments with reference to the drawings. The same or similar components, members, and processes are denoted by the same reference numerals, and redundant description thereof will be omitted as appropriate. The embodiments have been described for exemplary purposes only, and are by no means intended to restrict the present invention. Also, it is not necessarily essential for the present invention that all the features or a combination thereof be provided as described in the embodiments.

In the present specification, the state represented by the phrase "the member A is coupled to the member B" includes a state in which the member A is indirectly coupled to the member B via another member that does not substantially affect the electric connection between them, or that does not damage the functions or effects of the connection between them, in addition to a state in which they are physically and directly coupled.

Similarly, the state represented by the phrase "the member C is provided between the member A and the member B" includes a state in which the member A is indirectly coupled to the member C, or the member B is indirectly coupled to the member C via another member that does not substantially affect the electric connection between them, or that does not damage the functions or effects of the connection between them, in addition to a state in which they are directly coupled.

In the present specification, the reference symbols denoting electric signals such as a voltage signal, current signal, or the like, and the reference symbols denoting circuit elements such as a resistor, capacitor, or the like, also represent the corresponding voltage value, current value, resistance value, or capacitance value as necessary.

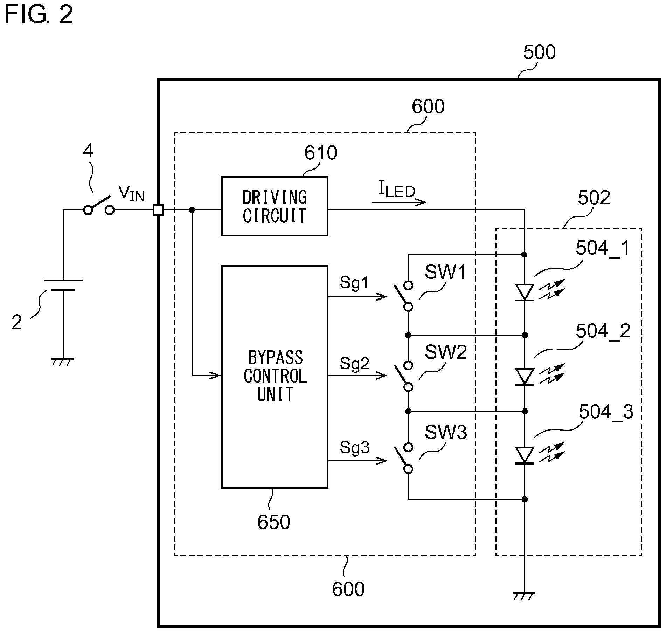

Fig. 2 is a block diagram showing an automotive lamp 500 including a lighting circuit 600 according to an embodiment. The automotive lamp 500 receives the supply of a DC voltage (input voltage) V_{IN} from a battery 2 via a switch 4. The automotive lamp 500 includes a semiconductor light source 502 and a lighting circuit 600. The semiconductor light source 502 includes a plurality of n (n ≥ 2) light-emitting elements 504_1, 504_2, ..., 504_n coupled in series. Fig. 2 shows an example in which n = 3. As such a light-emitting element 504, an LED is preferably employed, for example. However, the present invention is not restricted to such an example. Also, a laser diode (LD) or an organic EL element may be employed. The automotive lamp 500 is configured as a headlamp, for example. The semiconductor light source 502 may be configured as a white-color LED.

The lighting circuit 600 includes a driving circuit 610, multiple bypass switches SW1 through SW3, and a bypass control unit 650.

The driving circuit 610 receives the input voltage V_{IN}, stabilizes a driving current I_{LED} to a target value I_{REF}, and supplies the driving current I_{LED} thus stabilized to the semiconductor light source 502. In a case in which the driving circuit 610 is configured as a step-up converter, this leads to a problem of a high cost. Accordingly, the driving circuit 610 may be configured as any one from among (i) a constant current linear regulator, (ii) step-down switching converter that supports constant current output, and (iii) a combination of a step-down switching converter that supports constant voltage output and a constant current circuit. From the viewpoint of cost and power consumption, a step-down switching converter that supports constant current output may preferably be employed.

A plurality of m bypass switches SW1 through SWm are coupled in parallel with a corresponding part from among the multiple light-emitting elements 504_1 through 504_n. Description will be made in the present embodiment regarding an example in which the number n of the light-emitting elements 504 is the same as the number m of the bypass switches SW. Specifically, each bypass switch SW is assigned to one corresponding light-emitting element 504. When a given bypass switch SWi (i = 1, 2, 3) is turned on, the driving current I_{LED} is drawn to the bypass switch SWi side, thereby turning off the corresponding light-emitting element 504_i.

The bypass control unit 650 generates m-phase gate pulse signals Sg1 through Sg3 having a duty cycle that corresponds to the input voltage V_{IN}, and more precisely, a duty cycle having a negative correlation with the input voltage V_{IN}, with phases shifted from one another in increments of 360/m degrees (e.g., in a case in which m = 3, with phases shifted from one another by 120 degrees). The bypass control unit 650 controls the m bypass switches SW1 through SW3 according to the m-phase gate pulse signals Sg1 through Sg3 thus generated. Description will be made in the present embodiment regarding an example in which, when the gate pulse signal Sg# is set to the high level, the corresponding bypass switch SW# is turned on, thereby turning off the corresponding light-emitting element 504_#. The gate pulse signals Sg1 through Sg3 are generated to have the same frequency, which is determined to be higher than 60 Hz. Preferably, the frequency of the gate pulse signals Sg1 through Sg3 may be designed to be on the order of 100 to 400 Hz. With this, the blinking of each light-emitting element 504 cannot be perceived by human vision.

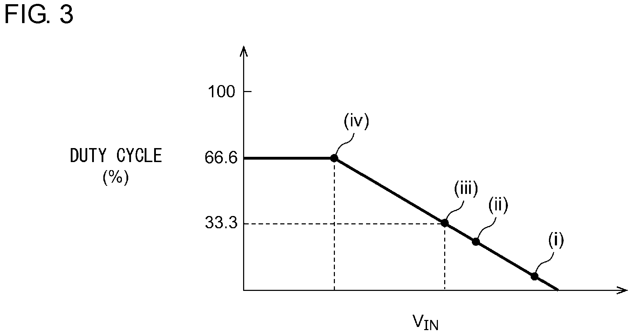

The above is the basic configuration of the lighting circuit 600. Next, description will be made regarding the operation thereof. Fig. 3 is a diagram showing a relation between the input voltage V_{IN} and the duty cycle of the gate pulse signal in the lighting circuit 600. Description will be made in the present embodiment regarding an example in which the number k of the bypass switches to be turned on at the same time is changed to 0, 1, and 2, according to a reduction of the input voltage V_{IN}. Accordingly, the number of the light-emitting elements 504 turned on at the same time is changed to 3, 2, and 1, according to the input voltage V_{IN}.

The duty cycle of the gate pulse signal Sg is raised from 0% up to (k_{MAX} × 100/m)% according to a reduction of the input voltage V_{IN}. Here, k_{MAX} represents the maximum number of the bypass switches to be turned on at the same time. In other words, k_{MAX} represents the maximum number of the light-emitting elements 504 to be turned off at the same time. In a case in which m = 3 and k_{MAX} = 2, the duty cycle is changed in a range from 0% up to 66%.

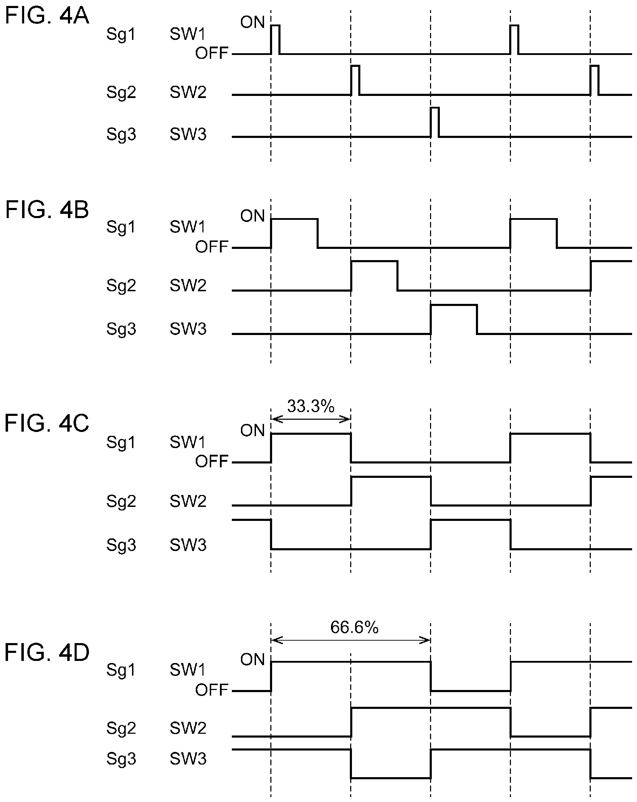

Figs. 4A through 4D are operation waveform diagrams showing the operation of the lighting circuit 600. Figs. 4A through 4D show four states with different input voltages V_{IN}. The four states correspond to the operation points (i) through (iv) in Fig. 3, respectively.

The above is the operation of the lighting circuit 600 and the automotive lamp 500. With the lighting circuit 600, the number of the light-emitting elements 504 to be turned on can be gradually reduced according to a reduction of the input voltage V_{IN}. Furthermore, the light-emitting elements 504 to be turned off are sequentially changed according to the period of the gate pulse signals Sg. This avoids a situation in which the same light-emitting elements 504 are turned off at the same time, thereby solving a problem of the occurrence of uneven luminance in the light distribution of the semiconductor light source 502. In a case in which the automotive lamp 500 is configured as a headlamp, this suppresses the occurrence of uneven luminance in the light distribution pattern.

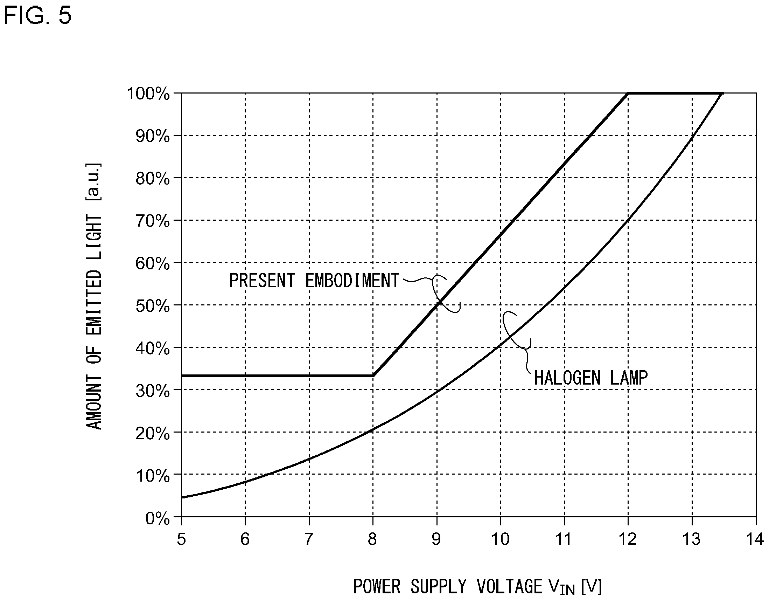

Description will be made regarding an additional advantage of the automotive lamp 500. Fig. 5 is a diagram showing a relation between the input voltage V_{IN} and the amount of light output from the semiconductor light source 502. As a comparison, Fig. 5 also shows power supply voltage characteristics of the amount of light output by a conventional halogen lamp. Regarding the characteristics of a halogen lamp and the characteristics supported by the present embodiment, the drawing shows the relative change in the amount of light according to a change in the power supply voltage, with the amount of light that is output when the power supply voltage V_{IN} of 13.5 V is supplied as 100%. As can be understood from a comparison of the two characteristics, the amount of light continuously decreases according to a reduction in the input voltage V_{IN}. This arrangement is capable of reproducing the halogen lamp characteristics in which the amount of light decreases according to a reduction in the power supply voltage.

In a case in which the duty cycle is changed in a discontinuous manner with respect to the input voltage V_{IN}, when the input voltage V_{IN} changes in the vicinity of a point of discontinuity, in some cases, such an arrangement involves a chattering problem in that the luminance provided by the semiconductor light source 502 discontinuously changes. With the present embodiment, such chattering can be suppressed, which is an additional advantage.

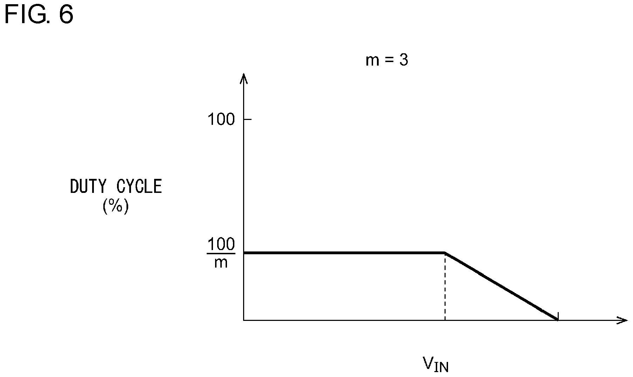

Fig. 6 is a diagram showing another example of the relation between the input voltage V_{IN} and the duty cycle of the gate pulse signal in the lighting circuit 600. Description will be made in this example regarding an arrangement in which k_{MAX} = 1. The number k of the bypass switches to be turned on at the same time is changed in a range from 0 to 1 according to a reduction in the input voltage V_{IN}. Accordingly, the number of the light-emitting elements 504 to be turned on at the same time is changed in a range from 3 to 2 according to the input voltage V_{IN}. The duty cycle of the gate pulse signal Sg is raised from 0% up to 33% (= k_{MAX} × 100/m) according to a reduction in the input voltage V_{IN}.

The present invention encompasses various kinds of apparatuses and methods that can be regarded as a block configuration or a circuit configuration shown in Fig. 2, or otherwise that can be derived from the aforementioned description. That is to say, the present invention is not restricted to a specific configuration. More specific description will be made below regarding an example configuration or an example for clarification and ease of understanding of the essence of the present invention and the operation. That is to say, the following description will by no means be intended to restrict the technical scope of the present invention.

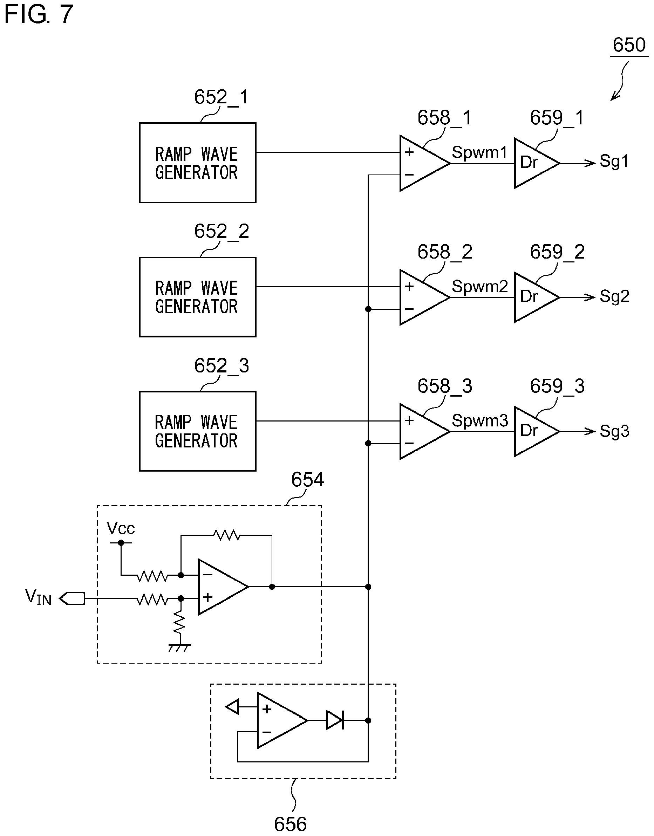

Fig. 7 is a block diagram showing an example configuration of a bypass control unit 650. A plurality of (m) ramp wave generators 652_1 through 652_m generate ramp waves Vramp1 through Vramp3 with a phase difference of 360°/m.

A non-inverting amplifier 654 amplifies the input voltage V_{IN}. A clamp circuit 656 clamps a duty cycle instruction voltage Vent for the non-inverting amplifier 654 such that it does not become lower than a predetermined lower limit voltage Vcl. The lower limit voltage Vcl is designed such that the duty cycle is set to 66.6%.

Each voltage comparator 658_# (# = "1", "2", "3") compares the duty cycle instruction voltage Vent with a corresponding ramp wave Vramp#, so as to output a rectangular pulse (PWM signal) Spwm#. The voltage comparators 658 output rectangular pulses having the same duty cycle and with phases shifted in increments of 360°/m.

Each driver 659_# outputs a gate pulse signal Sg# according to the PWM signal Spwm# output from the corresponding voltage comparator 658_#.

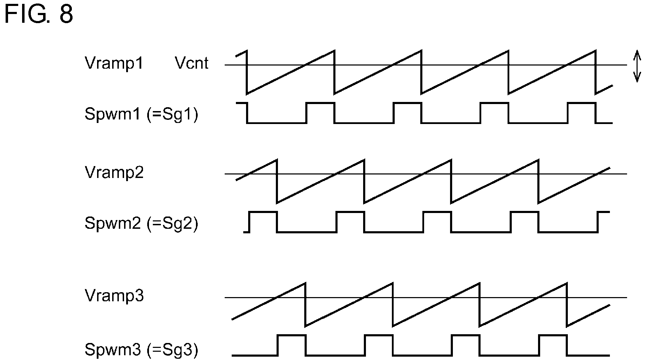

Fig. 8 is an operation waveform diagram showing the operation of the bypass control unit 650 shown in Fig. 7. As shown in the drawing, the bypass control unit 650 shown in Fig. 7 is capable of generating multiple gate pulse signals Sg1 through Sg3 having a duty cycle that corresponds to the input voltage V_{IN} with shifted phases.

It should be noted that, in Fig. 7, the non-inverting amplifier 654 may also be configured as an inverting amplifier. Also, the clamp circuit 656 may limit the duty cycle instruction voltage Vent that is an output of the non-inverting amplifier such that it does not exceed a predetermined upper limit level. With such an arrangement, the voltage comparator 658 may be arranged such that its inverting input and non-inverting input are swapped, or the driver 659 may be configured as an inverting-type driver. This supports the same operation.

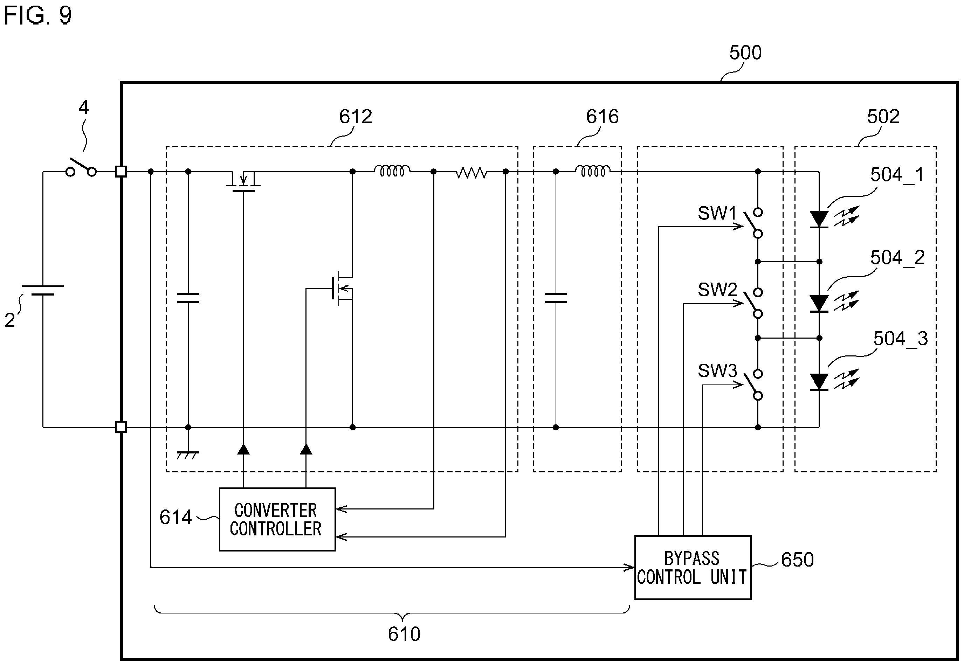

Fig. 9 is a block diagram showing an example configuration of the driving circuit 610. The driving circuit 610 includes a step-down converter (Buck converter) 612, a converter controller 614, and a current smoothing filter 616. The converter controller 614 feedback controls the switching state of the converter controller 614 such that the driving current I_{LED} approaches a target value I_{REF}.

In the operating mode shown in Fig. 4A or 4B, this arrangement alternately switches between a state in which all the bypass switches are turned off and a state in which only a single bypass switch is turned on. When all the bypass switches are turned off, the voltage across both ends of the semiconductor light source 502 (i.e., the output voltage of the step-down converter 612) is represented by (3 × Vf₀). In a state in which only a single bypass switch is turned on, the voltage across both ends of the semiconductor light source 502 is represented by (2 × Vf₀). Accordingly, the voltage across both ends of the semiconductor light source 502 is changed discontinuously. Such a discontinuous and steep change in the load has the potential to cause an overcurrent state (or ringing) of the driving current I_{LED}. Accordingly, in order to follow such a steep change in the load, the converter controller 614 may preferably be configured as a ripple-control-type converter controller having an advantage of high-speed responsivity. Examples of such a ripple control method include hysteresis control (Bang-Bang control), bottom-detection fixed-on-time control, peak-detection fixed-off-time control, etc.

In a case in which a feedback circuit employing an error amplifier is employed for the converter controller 614 instead of employing the ripple control method, or even in a case in which the converter controller 614 is configured using the ripple control method, such an arrangement has the potential to cause the occurrence of overcurrent in the driving current I_{LED}. Accordingly, the current smoothing filter 616 may be coupled to an output of the step-down converter 612. The current smoothing filter 616 allows ripple in the driving current I_{LED} associated with employing the ripple control method to be removed, and allows overcurrent in the driving current I_{LED} due to a sharp change in the load to be suppressed.

Description has been made above regarding an embodiment of the present invention with reference to the first embodiment. The above-described embodiment has been described for exemplary purposes only, and is by no means intended to be interpreted restrictively. Rather, it can be readily conceived by those skilled in this art that various modifications may be made by making various combinations of the aforementioned components or processes, which are also encompassed in the technical scope of the present invention. Description will be made below regarding such modifications.

### MODIFICATION 1

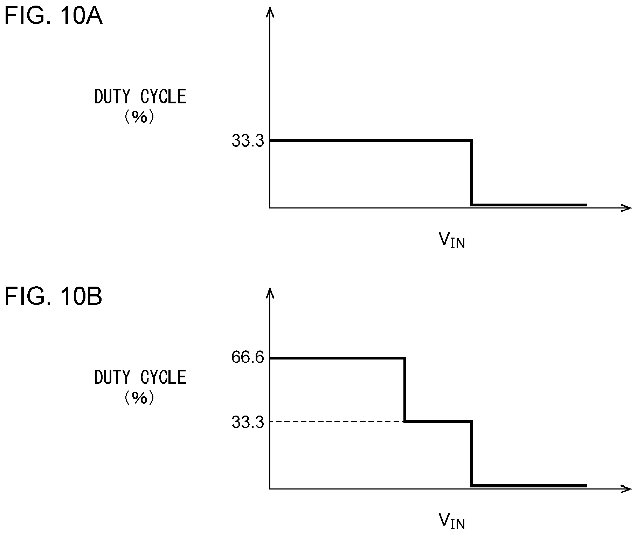

Description has been made in the embodiment regarding an arrangement in which the duty cycle of each gate pulse Sg is changed continuously according to the input voltage V_{IN}. However, the present invention is not restricted to such an arrangement. Figs. 10A and 10B are diagrams each showing a relation between the input voltage V_{IN} and the duty cycle of the gate pulse signal in the lighting circuit 600 according to a modification 1. Fig. 10A shows an example in which m = 3 and k_{MAX} = 1. Fig. 10B shows an example in which m = 3 and k_{MAX} = 2. Also, such a modification is capable of avoiding a situation in which a particular light-emitting element 504 is fixedly turned off, thereby suppressing the occurrence of uneven luminance of the semiconductor light source 502.

It should be noted that the function of the bypass control unit 650 according to the modification can be understood as follows. That is to say, the bypass control unit 650 determines the number k of the bypass switches SW1 through SW3 to be turned on at the same time. Furthermore, the bypass control unit 650 changes the k bypass switches to be set to the on state with a predetermined period (on the order of 100 to 200 Hz).

### MODIFICATION 2

Description has been made with reference to Figs. 3 and 6 regarding examples in which the duty cycle is changed with a constant slope with respect to the input voltage V_{IN}. However, the present invention is not restricted to such an example. For example, a flat range may be provided between the duty cycles of 0% and 33% or between the duty cycles of 33% and 66% as an intermediate range in which the duty cycle is maintained at a constant level independent of the input voltage. Also, instead of employing such a constant-slope straight-line function (linear function), the duty cycle may be changed according to a combination of multiple linear functions having different slopes or other curve functions such as a quadratic function or the like.

### MODIFICATION 3

Description has been made in the embodiment regarding an arrangement in which m-phase gate pulse signals are designed to have an equal phase difference of 360°/m. However, the present invention is not restricted to such an arrangement. Also, the m-phase gate pulse signals may be designed to have unequal phase differences.

### MODIFICATION 4

Description has been made in the embodiment regarding an arrangement in which the automotive lamp 500 is configured as a headlamp. However, the present invention is not restricted to such an arrangement. Also, the automotive lamp 500 may be configured as Daytime Running Lamps (DRL). Also, the present invention is applicable to amber LEDs for turn signals.

Also, the automotive lamp 500 may be configured as a stop lamp or a tail lamp. Also, the automotive lamp 500 may be configured as an LED socket configured such that the semiconductor light source 502 and the lighting circuit 600 are housed in a single package. In this case, even in a low-voltage state, this allows the semiconductor light source 502 to provide a luminance distribution with high uniformity, thereby suppressing degradation in its appearance.

### MODIFICATION 5

The automotive lamp 500 shown in Fig. 9 is provided with the current smoothing filter 616 at an output stage of the driving circuit 610 so as to suppress the occurrence of overcurrent or ringing. In some cases, from the viewpoint of mounting area or cost, such an arrangement requires the current smoothing filter 616 to includes an inductor having a small chip size, i.e., having a small inductance, or to include no inductor. In a case in which the current smoothing filter 616 has a small (or no) inductance, charge is discharged from a capacitor included in the current smoothing filter 616 due to the change in the voltage V_{OUT} across both ends of the semiconductor light source 502 when the bypass switch is turned on. In this stage, the discharging current is superimposed on the output current of the step-down converter 612. This arrangement has the potential to cause the occurrence of overshoot in the driving current I_{LED} to be supplied to the semiconductor light source 502, or has the potential to cause the occurrence of overcurrent.

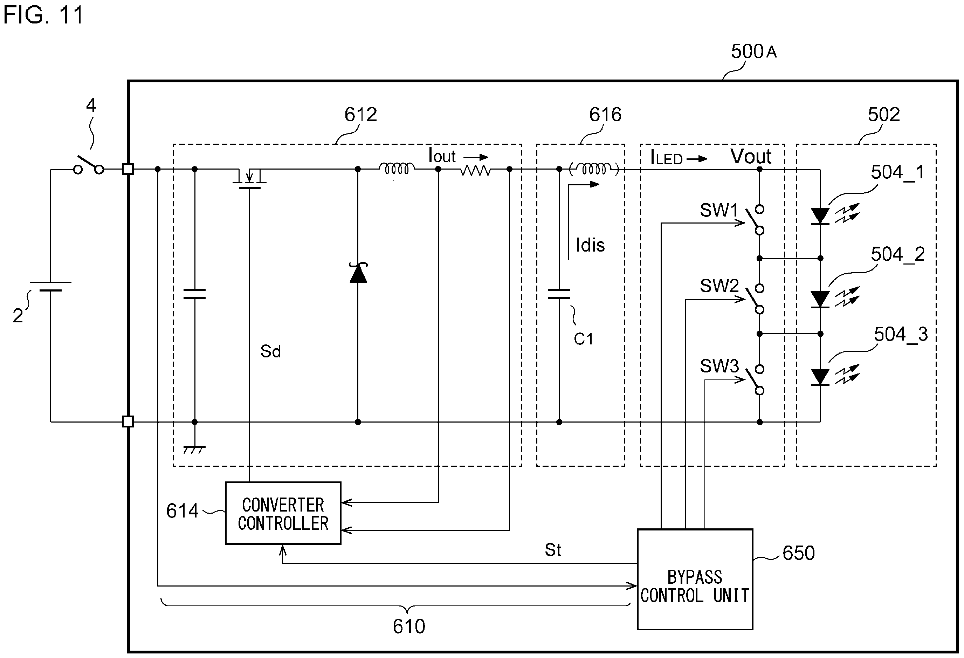

Fig. 11 is a circuit diagram showing an automotive lamp 500A according to a modification 5. The bypass control unit 650 generates a timing signal St in synchronization with the turn-on states of the bypass switches SW1 through SW3. The timing signal St is supplied to an enable pin (inverted logic) ¬EN (¥EN) ("¥" represents "logical inversion"). The converter controller 614 fixes the driving signal Sd to be supplied to the gate of the switching transistor at the off level during a suspension period τ, thereby suspending the switching operation of the step-down converter 612. The length of the suspension period τ is designed as described later so as to cancel out overshoot and overcurrent in the driving current due to the turn-on operation of each of the bypass switches SW1 through SW3.

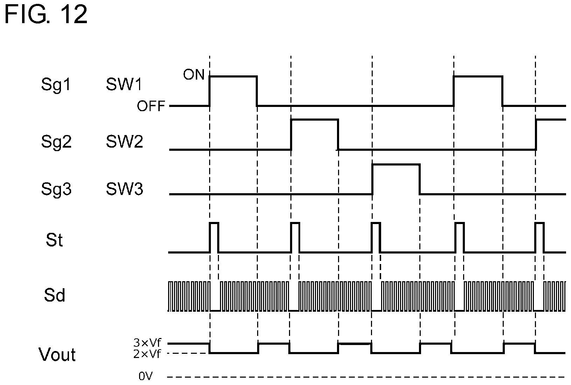

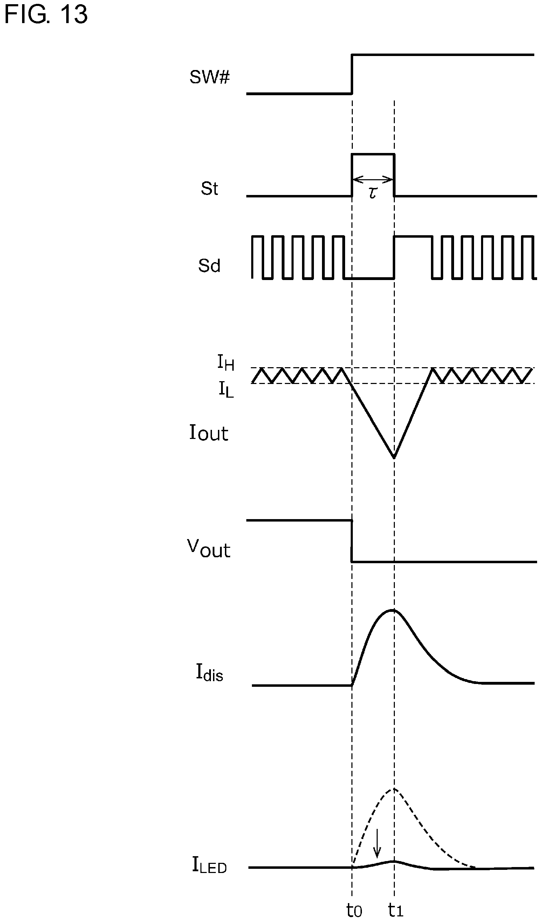

Next, description will be made with reference to Figs. 12 and 13 regarding the operation of the automotive lamp 500. Fig. 12 is a time chart showing the operation of the automotive lamp 500A shown in Fig. 11. The timing signal St is asserted (set to the high level) at a timing at which each of the bypass switches SW1 through SW3 is turned off, and is negated (set to the low level) after a predetermined period of time τ elapses. During a period in which the timing signal St is asserted, the driving signal Sd is fixed at the low level (off level of the switching transistor), thereby suspending the switching operation of the step-down converter 612. During a period in which all the bypass switches SW1 through SW3 are turned off, the voltage V_{OUT} applied across both ends of the load is represented by 3 × Vf. During a period in which any one of the bypass switches SW1 through SW3 is turned on, the voltage V_{OUT} is represented by 2 × Vf.

Fig. 13 is an operation waveform diagram showing the operation of the automotive lamp 500A shown in Fig. 11. In this example, the converter controller 614 stabilizes the output current I_{OUT} of the step-down converter 612 by Bang-Bang control. Specifically, during a period in which the timing signal St is negated, when the output current I_{OUT} reaches a perk current I_{H}, the converter controller 614 switches the driving signal Sd to the off level. On the other hand, when the output current I_{OUT} decreases to a bottom current I_{L}, the converter controller 614 switches the driving signal Sd to the on level. Moreover, during a period in which the timing signal St is asserted, the converter controller 614 fixes the driving signal Sd at the off level.

When a given bypass switch SW# is turned on at the time point t₀, the voltage V_{OUT} across both ends of the load decreases. In this state, the capacitor C1 of the current smoothing filter 616 is discharged, thereby supplying a discharge current Idis to the semiconductor light source 502. If the output current lout of the step-down converter 612 is maintained at a constant level in this stage, overshoot occurs in the load current I_{LED} supplied to the semiconductor light source 502 as indicated by the line of alternately long and short dashes.

In contrast, with the present modification, during the suspension period τ from the time point t₀ up to t₁, the switching operation of the step-down converter 612 is suspended, thereby reducing the output current lout of the step-down converter 612. Accordingly, the reduction of the output current lout cancels out the discharge current Idis, thereby suppressing the occurrence of overshoot in the load current I_{LED} as indicated by the solid line. The length of the suspension period τ may be optimized so as to suppress the occurrence of overshoot. This modification allows the current smoothing filter 616 to have no inductor, or to have only a low-cost and/or compact-size inductor having a small inductance value.

It should be noted that Fig. 11 shows an example employing a diode rectification converter. Also, this modification is effectively applicable to a synchronous rectification converter as shown in Fig. 9. Description has been made in this example employing Bang-Bang control. Also, other kinds of ripple control methods may be employed, examples of which include a peak-detection fixed-off-time control mode, a bottom-detection fixed-on-time control mode, and the like. Alternatively, a control method employing an error amplifier may be employed.

Description has been made with reference to Fig. 11 regarding an arrangement in which the timing signal St is input to the EN pin of the converter controller 614. However, the present invention is not restricted to such an arrangement. The timing signal St may be configured as a signal that indicates a start timing of the suspension period τ. The converter controller 614 may be configured to suspend the driving operation of the step-down converter 612 in response to the assertion of the timing signal St, to measure the suspension period τ by means of an internal timer, and to restart the driving operation of the step-down converter 612 after the suspension period τ elapses.

Description has been made regarding the present invention with reference to the embodiments using specific terms. However, the above-described embodiments show only the mechanisms and applications of the present invention for exemplary purposes only, and are by no means intended to be interpreted restrictively. Rather, various modifications and various changes in the layout can be made without departing from the spirit and scope of the present invention defined in appended claims.

### [INDUSTRIAL APPLICABILITY]

The present invention relates to a lamp employed for an automobile or the like.

### [DESCRIPTION OF THE REFERENCE NUMERALS]

2 battery, 4 switch, 500 automotive lamp, 502 semiconductor light source, 504 light-emitting element, 505 by passable element, 600 lighting circuit, 610 driving circuit, 612 step-down converter, 614 converter controller, 616 current smoothing filter, 650 bypass control unit, 652 ramp wave generator, 654 inverting amplifier, 656 clamp circuit, 658 voltage comparator, 659 driver.

## Claims

1. A lighting circuit for a semiconductor light source comprising a plurality of light-emitting elements coupled in series, the lighting circuit comprising:
a driving circuit structured to receive an input voltage, and to supply a driving current to the semiconductor light source;
a plurality of m (m ≥ 2) bypass switches coupled in parallel with a corresponding part from among the plurality of light-emitting elements; and
a bypass control unit structured to generate m-phase gate pulse signals having a duty cycle that corresponds to the input voltage and with shifted phases, and to control the m bypass switches according to the m-phase gate pulse signals.

2. The lighting circuit according to claim 1, wherein the duty cycle of the m-phase gate pulse signals is continuously changed according to the input voltage.

3. A lighting circuit for a semiconductor light source comprising a plurality of light-emitting elements coupled in series, the lighting circuit comprising:
a driving circuit structured to receive an input voltage, and to supply a driving current to the semiconductor light source;
a plurality of m (m ≥ 2) bypass switches coupled in parallel with a corresponding part from among the plurality of light-emitting elements, and each structured to bypass the driving current when the bypass switch is turned on; and
a bypass control unit structured to determine a number k of the bypass switches to be set to an on state at the same time according to the input voltage, and to change the k bypass switches set to the on state with a predetermined period.

4. The lighting circuit according to any one of claims 1 through 3, wherein the driving circuit comprises:
a step-down converter; and
a converter controller structured to feedback control the step-down converter such that the driving current approaches a target value.

5. The lighting circuit according to claim 4, wherein the driving circuit further comprises a current smoothing filter coupled to an output of the step-down converter.

6. The lighting circuit according to claim 5, wherein the converter controller suspends a driving operation of the step-down converter during a suspension period from a start timing synchronized with a turn-on of the bypass switch.

7. The lighting circuit according to any one of claims 4 through 6, wherein the converter controller employs a ripple control method.

8. An automotive lamp comprising:
a semiconductor light source comprising a plurality of light-emitting elements; and
the lighting circuit according to any one of claims 1 through 7, structured to drive the semiconductor light source.
